# FASCICULE DE BREVET EUROPEEN

(11) **EP 3 469 970 B1**
(45) Date de publication et mention de la délivrance du brevet: **06.05.2026**
(21) Numéro de dépôt: 18199878.2
(22) Date de dépôt: 11.10.2018
(51) Int. Cl.: A47J 43/07

(54) **PORTE-LAME POUR ROBOT MÉNAGER DE CUISINE**
SCHNEIDENHALTER FÜR HAUSHALTSKÜCHENROBOTER
BLADE HOLDER FOR KITCHEN ROBOT

(30) Priorité: 13.10.2017 FR 1759600
(43) Date de publication de la demande: 17.04.2019
(73) Titulaire: BEABA, 01100 Bellignat (FR)
(72) Inventeur: BOUHOURS, Rodolphe, 01460 PORT (FR); NOCA, Laurent, 26390 HAUTERIVES (FR); MERLET, Marie-gerard, 85230 CHATEAU GUIBERT (FR); GENDRE, Dany, 85190 AIZENAY (FR); OUVRARD, Gilles, 85000 LA ROCHE SUR YON (FR)
(74) Mandataire: Gevers & Orès

(56) Documents cités:
- EP-A1- 3 238 584
- EP-A1- 3 289 940
- WO-A1-2010/099721
- CN-Y- 201 404 117
- DE-A1- 102010 060 270
- DE-B4- 102010 060 270
- FR-A1- 2 967 340
- US-A1- 2002 079 393
- US-A1- 2012 027 331

## Description

La présente invention concerne le domaine du petit électroménager destiné au réchauffement de récipients alimentaires et/ou à la cuisson d'aliments te/ou à la préparation d'aliments. Préférentiellement, l'invention s'applique au domaine du petit électroménager de puériculture mais de manière non-exclusive.

Les appareils de cuisine tels que les robots de cuisine comprennent classiquement un bol de préparation d'aliments qui peut être utilisé également pour la cuisson d'aliments. Pour préparer les aliments, le bol comprend classiquement une lame configurée pour être entrainée en rotation par un arbre d'entrainement rotatif ménagé dans le fond du bol. La lame est agencée sur un porte-lame qui peut être soit intégré de façon fixe sur l'arbre d'entrainement soit de façon amovible par un système de verrouillage.

A cet égard, on connaît les documents US2002/079393, CN201404117, WO2010/099721 et US2012/027331.

Le document US2002/079393 concerne les mélangeurs, les mélangeurs et les machines similaires, et en particulier les dispositifs comportant un agitateur, une roue à aubes, une lame ou un autre outil monté dans un récipient ou récipient amovible et entraîné en rotation par un moteur situé dans la base fixe de la machine. Plus particulièrement, ce document a pour objet un entraînement magnétique pour transmettre un mouvement de rotation d'une source motrice dans un espace clos sans connexion mécanique directe.

Le document CN201404117 appartient au domaine technique des machines d'agitation alimentaire, en particulier à une structure de montage d'un agitateur pour un agitateur alimentaire, qui comprend une fraise à agiter, un corps principal de porte-outil et un palier. Un arbre de coupe du dispositif de coupe à agitation est enroulé dans le palier par rotation, le palier est assemblé de manière fixe dans un manchon de palier. La structure comprend en outre une bague d'étanchéité de la fraise montée sur la tige de coupe située au-dessous d'une lame de la fraise à agiter; et la surface inférieure de la bague d'étanchéité du couteau agitateur est en contact avec la surface d'extrémité supérieure du manchon de palier.

Le document WO2010/099721 décrit un couteau pour un extracteur de jus de fruits. Le dispositif de coupe comprend une unité de coupe qui est composée d'un arbre de coupe et de lames de coupe montées sur l'extrémité supérieure de l'arbre de coupe; un bloc de coupe; un palier composé d'un support de palier, d'un capuchon de palier et d'au moins un roulement à billes. Une bague d'espacement est placée sur la jonction de la tige de coupe et de la bague intérieure du roulement à billes et le diamètre extérieur de la bague d'espacement est supérieur au diamètre intérieur du roulement et le diamètre intérieur de la bague d'espacement est plus petit que le diamètre extérieur de l'arbre de coupe. Le document US2012/027331 divulgue un porte-lame pour robot ménager de cuisine destiné au moins à la préparation d'aliments, le porte-lame étant configuré pour être positionné de manière amovible dans un bol de préparation et/ou de cuisson d'aliments d'un robot ménager de cuisine, le porte-lame comprenant:
- au moins un organe de verrouillage configuré pour verrouiller le porte-lame dans le bol,
- au moins une lame comprenant au moins un premier couteau, et au moins un deuxième couteau,
- un support comprenant au moins un arbre s'étendant selon un axe longitudinal du porte-lame, la lame étant montée sur le support autour de l'arbre,
- un premier joint,
la lame comprenant une portion centrale à partir de laquelle s'étendent radialement le premier couteau et le deuxième couteau, la portion centrale de la lame comprenant un orifice de passage de l'arbre du support, la portion centrale de la lame comprenant une première face coopérant avec le premier joint qui est positionné entre l'organe de verrouillage et la portion centrale de la lame, le support comprenant une première portion sur laquelle est montée l'arbre et qui est agencée en regard de la deuxième face de la portion centrale en état monté du porte-lame.

Les porte-lames intégrés présentent l'inconvénient de ne pas être amovibles ce qui rend le nettoyage des lames et de l'espace entre le porte-lame et le fond du bol, fastidieux et approximatif. En outre, comme les porte-lames sont à demeure, il n'est pas possible de changer la lame en cas de défaut ou d'usure.

Les porte-lames amovibles sont généralement verrouillés sur le fond du bol via un écrou de verrouillage ou un système baïonnette. L'avantage de ces porte-lames est que l'on peut les changer facilement et les retirer pour nettoyer le fond du bol. Cependant, ces porte-lames présentent l'inconvénient d'avoir une structure complexe nécessitant une surface métallique sur laquelle repose la lame pour les frottements, et comprend une pluralité de joints et de pièces complexifiant le montage.

L'invention a pour but de remédier à tout ou partie des inconvénients précités en fournissant un porte-lame amovible dont la structure est simplifiée.

À cet effet, l'invention a pour objet un porte-lame pour robot ménager de cuisine selon la revendication 1.

La structure du porte-lame selon l'invention est simplifiée notamment parce que la lame comprend une portion centrale faisant office de rondelle ce qui permet de s'affranchir de surface métallique de frottement, et grâce à la configuration avec un premier joint, il n'est plus nécessaire d'avoir un premier joint avant et après la lame pour assurer l'étanchéité du porte-lame. Avantageusement, la portion centrale de la lame fait office de rondelle métallique qui est résistante au frottement et à l'échauffement dus à la rotation du porte-lame.

Selon l'invention, la configuration de la lame avec deux couteaux permet d'améliorer l'efficacité de coupe des aliments dans le bol.

Selon l'invention, le deuxième couteau s'étend radialement depuis la portion centrale de la lame, préférentiellement dans une direction différente, préférentiellement opposée, à celle dans laquelle s'étend le premier couteau.

Selon une forme de réalisation de l'invention, le deuxième couteau est agencé symétriquement au premier couteau par rapport à la portion centrale de la lame. Ainsi, la coupe des aliments est plus efficace et cette configuration symétrique équilibre la lame.

Selon une forme de réalisation de l'invention, la lame peut comprendre une pluralité de couteaux, les couteaux étant équilibrés autour de la portion centrale.

Selon une forme de réalisation de l'invention, la lame est surmoulée ou montée en force sur l'arbre du support.

Selon une forme de réalisation de l'invention, la lame est en métal et préférentiellement en acier.

Selon une forme de réalisation de l'invention, la portion centrale de la lame est montée de manière solidaire définitivement sur le support.

Selon une forme de réalisation de l'invention, la portion centrale de lame est surmoulée dans le support.

Selon une forme de réalisation de l'invention, le support comprend une première portion sur laquelle est ménagé l'arbre, ladite première portion étant agencée en regard de la deuxième face de la lame en état monté du porte-lame.

Selon une forme de réalisation de l'invention, le support comprend en outre un organe de préhension agencé sur la première portion du support. L'organe de préhension permet avantageusement de manipuler et de retirer le porte-lame du bol sans risque de blessure.

Selon une forme de réalisation de l'invention, l'organe de préhension se présente sous la forme d'un ergot saillant, préférentiellement rectangulaire, s'étendant depuis la première portion selon l'axe longitudinal du porte-lame.

Selon une forme de réalisation de l'invention, l'arbre est configuré pour être mis en rotation par rapport à l'organe de verrouillage par un arbre d'entrainement dans le bol.

Selon une forme de réalisation de l'invention, l'organe de verrouillage comprend au moins une portion supérieure comprenant une première face conformée pour recevoir le premier joint.

Selon une forme de réalisation de l'invention, la portion supérieure de l'organe de verrouillage comprend en outre une rainure de réception conformée pour loger au moins un deuxième joint, ladite rainure de réception étant agencée au niveau d'une deuxième face de la portion supérieure, opposée à la première face.

Selon une forme de réalisation de l'invention, l'organe de verrouillage comprend une portion inférieure conformée pour coopérer avec une partie du bol de préparation et/ou de cuisson d'aliments.

Selon une forme de réalisation de l'invention, la portion inférieure comprend au moins une première déformation et au moins une deuxième déformation, chacune destinée à coopérer avec une forme complémentaire ménagée sur le bol de préparation et/ou de cuisson d'aliments, la première déformation et la deuxième déformation étant chacune partie d'un système de verrouillage à baïonnette.

Selon une forme de réalisation de l'invention, la portion inférieure comprend une troisième déformation destinée à coopérer avec une forme complémentaire ménagée sur le bol de préparation et/ou de cuisson d'aliments, la troisième déformation étant partie du système de verrouillage à baïonnette. Avantageusement, la portion inférieure est conformée pour se verrouiller sur le bol par un système baïonnette dont la première, la deuxième et la troisième déformation font partie. Ce système permet de sécuriser le porte lame sur le bol et permettre également de pourvoir l'enlever aisément du bol.

Selon une forme de réalisation de l'invention, l'organe de verrouillage comprend une portion centrale, positionnée entre la portion supérieure et la portion inférieure.

Selon l'invention, le premier joint est configuré pour réaliser l'étanchéité entre l'arbre du support et l'organe de verrouillage.

Selon l'invention, le premier joint est agencé sur la première face de la lame est un joint à lèvre. Avantageusement, le premier joint à lèvre permet de s'adapter aux tolérances de hauteurs du bol.

Selon une forme de réalisation de l'invention, le porte-lame comprend en outre un deuxième joint configuré pour réaliser l'étanchéité entre le porte-lame et le bol de préparation et/ou de cuisson d'aliments.

Selon une forme de réalisation de l'invention, le deuxième joint est un joint à lèvre ou un joint torique ou joint plat.

Selon une forme de réalisation de l'invention, l'organe de verrouillage comprend un premier alésage conformé pour loger l'arbre du support. Alternativement, l'organe de verrouillage peut comprendre un palier lisse configuré pour loger l'arbre du support.

Selon une forme de réalisation de l'invention, l'organe de verrouillage comprend un deuxième alésage, adjacent au premier alésage, le deuxième alésage étant conformé pour loger un collet de verrouillage.

Selon une forme de réalisation de l'invention, le deuxième alésage est ménagé au moins au niveau de la portion inférieure de l'organe de verrouillage.

Selon une forme de réalisation de l'invention, le porte-lame comprend un collet de verrouillage configuré pour bloquer la translation verticale de l'arbre du support.

L'invention sera mieux comprise, grâce à la description ci-après, qui se rapporte à des modes de réalisation selon la présente invention, donnés à titre d'exemples non limitatifs et expliqués avec référence aux figures schématiques annexées. Les figures schématiques annexées sont listées ci-dessous :
- la figure 1 est une vue en perspective du porte-lame selon un premier mode de réalisation de l'invention,
- la figure 2 est une vue de face du porte-lame représenté selon un deuxième mode de réalisation de l'invention,
- la figure 3 est une vue de face en coupe longitudinale du porte-lame représenté en figure 1,
- la figure 4 est une vue de face en coupe du porte-lame représenté en figure 2,
- la figure 5 est une vue en perspective en coupe longitudinale du porte-lame représenté en figure 2,
- la figure 6 est une vue éclatée en perspective du porte-lame représenté en figure 1,
- la figure 7 est une vue éclatée en perspective du porte-lame représenté en figure 2,
- la figure 8 est une vue en coupe d'un bol pour robot de cuisine comprenant le porte-lame selon le premier mode de réalisation,
- la figure 9 est une vue en coupe d'un bol pour robot de cuisine comprenant le porte-lame selon le deuxième mode de réalisation
- la figure 10 est une vue en coupe de dessous du bol de cuisine dans lequel l'organe de verrouillage est en position verrouillée, et
- la figure 11 est une vue en coupe de dessous du bol de cuisine dans lequel l'organe de verrouillage est en position déverrouillée.

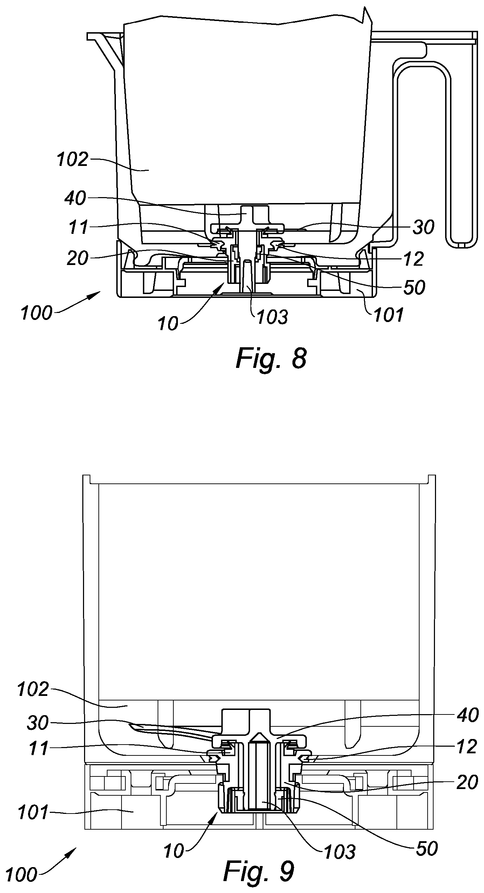

Quel que soit le mode de réalisation, le porte-lame 10 selon l'invention est un porte-lame 10 pour robot ménager de cuisine destiné au moins à la préparation d'aliments. Plus particulièrement, le porte-lame 10 est configuré pour être positionné de manière amovible dans un bol 100 de préparation et/ou de cuisson d'aliments d'un robot ménager de cuisine comme illustré en figures 8 et 9.

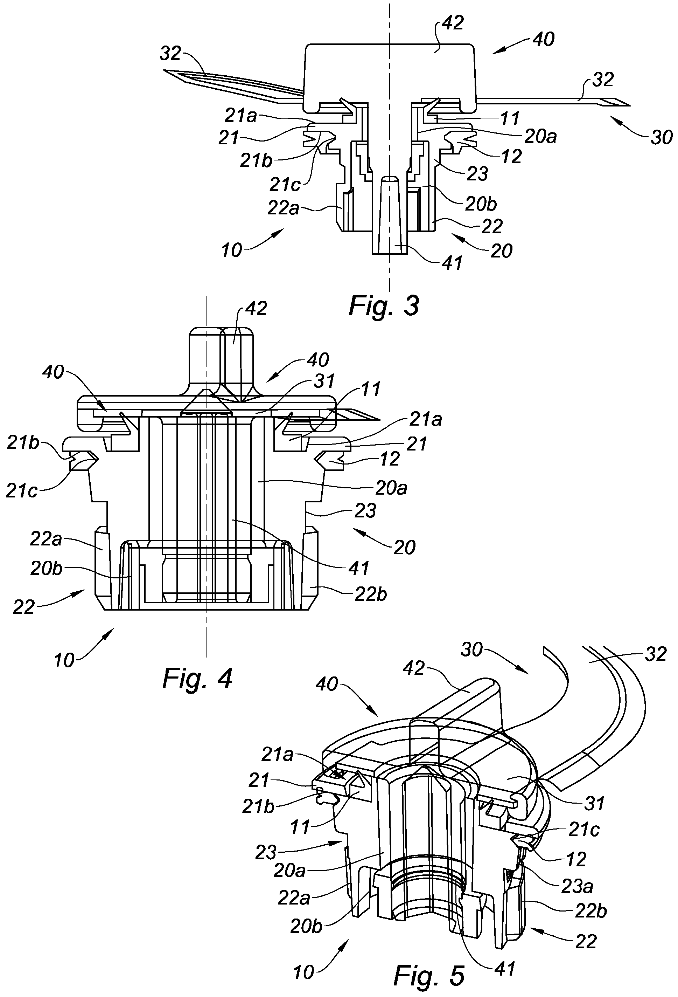

Quel que soit le mode de réalisation, le porte-lame 10 comprend au moins un organe de verrouillage 20 configuré pour verrouiller le porte-lame 10 dans le bol 100. L'organe de verrouillage 20 comprend au moins une portion supérieure 21 comprenant une première face 21a conformée pour recevoir un premier joint 11 à lèvre comme illustré aux figures 3, 4 et 5. Selon l'invention, le premier joint 11 est configuré pour réaliser l'étanchéité entre l'arbre 41 du support 40 et l'organe de verrouillage 20.

Comme on peut le voir notamment aux figures 3, 4 et 5, la portion supérieure 21 de l'organe de verrouillage 20 comprend en outre une rainure de réception 21c conformée pour loger au moins un deuxième joint 12, ladite rainure de réception 21c étant agencée au niveau d'une deuxième face 21b de la portion supérieure 21, opposée à la première face 21a.

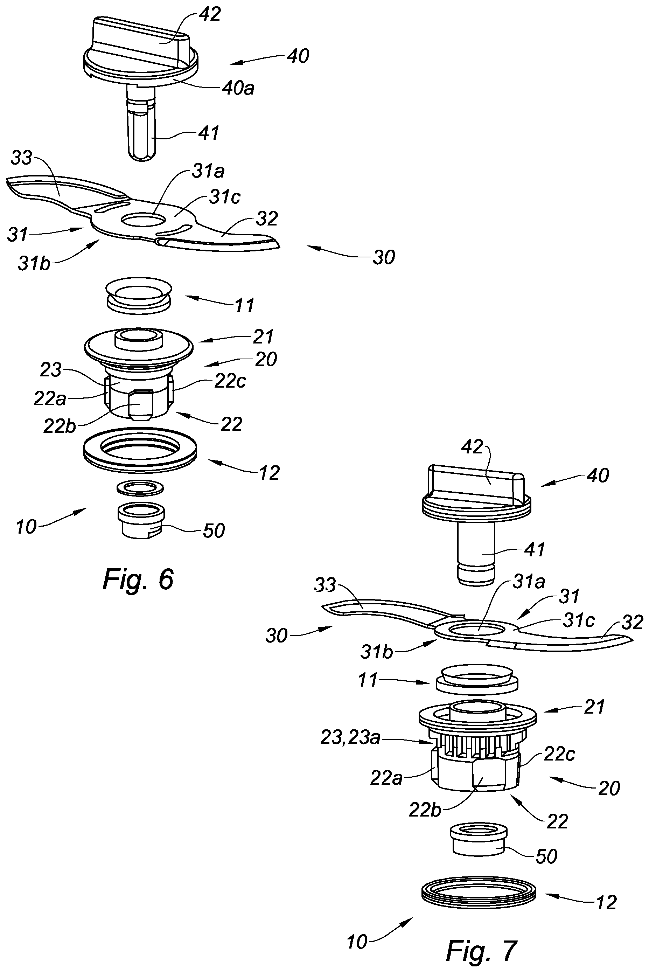

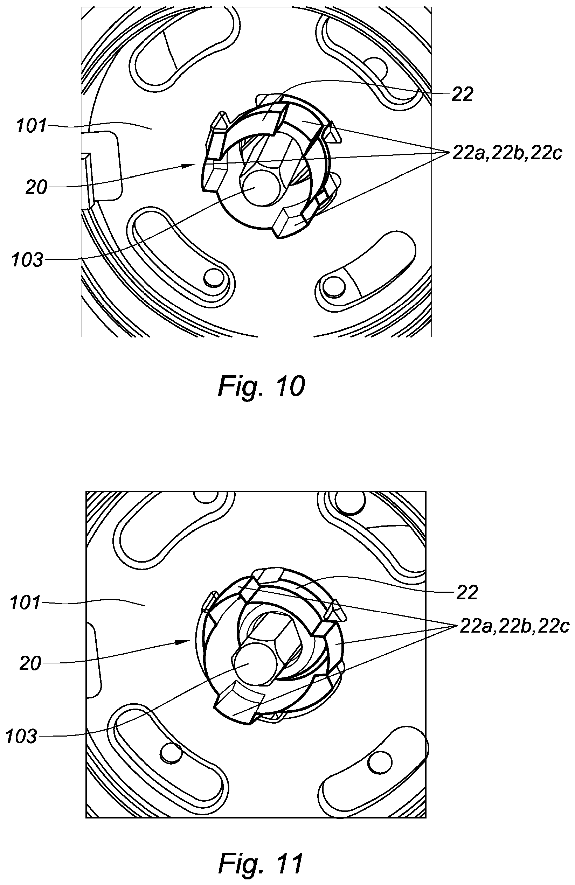

Quel que soit le mode de réalisation, l'organe de verrouillage 20 comprend une portion inférieure 22 conformée pour coopérer avec une partie du bol 100 de préparation et/ou de cuisson d'aliments comme illustré aux figures 8 à 11. Comme on peut le voir notamment aux figures 6 et 7 et quel que soit le mode de réalisation, la portion inférieure 22 comprend au moins une première déformation 22a et au moins une deuxième déformation 22b, chacune destinée à coopérer avec une forme complémentaire (non représentée) ménagée sur le bol 100 de préparation et/ou de cuisson d'aliments, la première déformation 22a et la deuxième déformation 22b étant chacune partie d'un système de verrouillage à baïonnette. En outre, la portion inférieure 22 comprend une troisième déformation 22c destinée à coopérer avec une forme complémentaire ménagée sur le bol 100 de préparation et/ou de cuisson d'aliments comme illustré aux figures 10 et 11.

Dans les exemples représentés aux figures 6 et 7 et quel que soit le mode de réalisation, l'organe de verrouillage 20 comprend une portion centrale 23, positionnée entre la portion supérieure 21 et la portion inférieure 22.

Quel que soit le mode de réalisation, l'organe de verrouillage 20 comprend un premier alésage 20a conformé pour loger l'arbre 41 du support 40 qui sera décrit plus loin dans la description et un deuxième alésage 20b, adjacent au premier alésage 20a, le deuxième alésage 20b étant conformé pour loger un collet de verrouillage 50 configuré pour bloquer la translation verticale de l'arbre du support, comme illustré notamment aux figures 3 à 5, 8 et 9. Dans une variante non représentée, le premier alésage peut être un palier lisse.

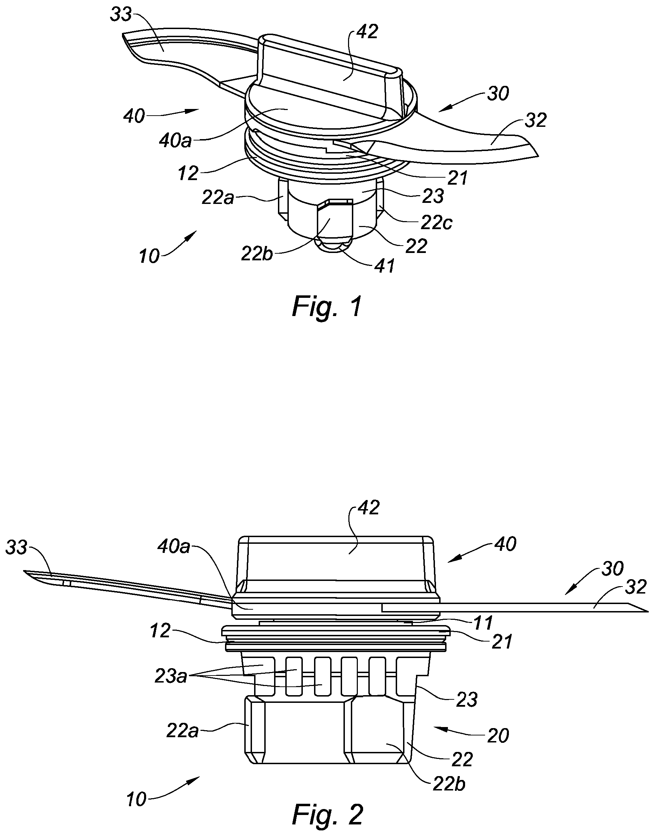

Quel que soit le mode de réalisation, le porte-lame 10 comprend en outre au moins une lame 30 comprenant une portion centrale 31 à partir de laquelle s'étend radialement un premier couteau 32, la portion centrale 31 comprenant un orifice de passage 31a destiné à coopérer avec un l'arbre 41 d'un support 40 du porte-lame 10, la portion centrale 31 comprenant une deuxième face 31c sur laquelle est positionné le support 40 et une première face 31b, opposée à la deuxième face 31c, configurée pour coopérer avec le premier joint 11, positionné entre l'organe de verrouillage 20 et la portion centrale 31 de la lame 30. En outre et comme illustré notamment aux figures 1, 2, 3, 6 et 7, la lame 30 comprend un deuxième couteau 33 s'étendant radialement depuis la portion centrale 31 de la lame 30 dans une direction différente, préférentiellement opposée, à celle dans laquelle s'étend le premier couteau 32.

Quel que soit le mode de réalisation, le porte-lame 10 comprend en outre au moins un support 40 comprenant au moins un arbre 41 selon un axe longitudinal X-X du porte-lame 10, la lame 30 étant montée sur le support 40 autour de l'arbre 41 comme illustré notamment aux figures 6 et 7. Le support 40 comprend une première portion 40a sur laquelle est ménagé l'arbre 41, ladite première portion 40a étant agencée en regard de la deuxième face 31c de la portion centrale 31 de la lame 30 en état monté du porte-lame 10. Comme on peut notamment le voir aux figures 1 et 2, le support 40 comprend en outre un organe de préhension 42 agencé sur la première portion du support 40 ou plus particulièrement, l'organe de préhension 42 est monté sur l'arbre 41. Comme on peut le voir dans les exemples illustrés, l'organe de préhension 42 se présente sous la forme d'un ergot saillant, préférentiellement rectangulaire, s'étendant depuis la première portion 40a du support 40 selon l'axe longitudinal X-X du porte-lame 10.

Quel que soit le mode de réalisation, l'arbre 41 est configuré pour être mis en rotation par rapport à l'organe de verrouillage 20 par un arbre d'entrainement 103 dans le bol 100, comme représenté aux figures 8 et 9. Avantageusement, la mise en rotation peut être effectuée grâce à un montage du porte-lame 10 avec un jeu ou bien par un montage avec un palier lisse.

Avantageusement, le porte-lame 10 comprend un deuxième joint 12 configuré pour réaliser l'étanchéité entre le porte-lame 10 et le bol 100 de préparation et/ou de cuisson d'aliments comme illustré aux figures 8 et 9 par exemple. Dans les exemples illustrés aux figures 1 à 9, le deuxième joint est un joint à lèvre.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention, tel que défini par les revendications.

## Revendications

1. Porte-lame (10) pour robot ménager de cuisine destiné au moins à la préparation d'aliments, le porte-lame (10) étant configuré pour être positionné de manière amovible dans un bol (100) de préparation et/ou de cuisson d'aliments d'un robot ménager de cuisine, le porte-lame (10) comprenant :
- au moins un organe de verrouillage (20) configuré pour verrouiller le porte-lame (10) dans le bol (100),
- au moins une lame (30) comprenant au moins un premier couteau (32), et au moins un deuxième couteau (33),
- un support (40) comprenant au moins un arbre (41) s'étendant selon un axe longitudinal du porte-lame (10), la lame (30) étant montée sur le support (40) autour de l'arbre (41),
- un premier joint (11), la lame (30) comprenant une portion centrale (31) à partir de laquelle s'étendent radialement le premier couteau (32) et le deuxième couteau (33), la portion centrale (31) de la lame (30) comprenant un orifice de passage (31a) de l'arbre (41) du support (40), la portion centrale (31) de la lame (30) comprenant une première face coopérant avec le premier joint (11) qui est positionné entre l'organe de verrouillage (20) et la portion centrale (31) de la lame (30) et une deuxième face, qui est opposée à la première face, et sur laquelle est positionnée le support (40), le premier joint (11) étant disposé contre la première surface et étant un joint à lèvre, le support (40) comprenant une première portion (40a) sur laquelle est montée l'arbre (41) et qui est agencée en regard de la deuxième face (31c) de la portion centrale en état monté du porte-lame (10).

2. Porte-lame selon la revendication 1, dans lequel la portion centrale (31) de la lame (30) est montée de manière solidaire définitivement sur le support (40).

3. Porte-lame selon l'une quelconque des revendications 1 ou 2, dans lequel, la portion centrale (31) de la lame (30) est surmoulée dans le support (40).

4. Porte-lame selon l'une quelconque des revendications 1 à 3, dans lequel le support (40) comprend en outre un organe de préhension (42) agencé sur une première portion du support (40).

5. Porte-lame selon l'une quelconque des revendications 1 à 4, dans lequel l'organe de verrouillage (20) comprend une portion inférieure (22) conformée pour coopérer avec une partie du bol (100) de préparation et/ou de cuisson d'aliments.

6. Porte-lame selon la revendication 5, dans lequel la portion inférieure (22) comprend au moins une première déformation (22a) et au moins une deuxième déformation (22b), chacune destinée à coopérer avec une forme complémentaire ménagée sur le bol (100) de préparation et/ou de cuisson d'aliments, la première déformation (22a) et la deuxième déformation (22b) étant chacune partie d'un système de verrouillage à baïonnette.

7. Porte-lame selon la revendication 6, dans lequel la portion inférieure comprend une troisième déformation (22c) destinée à coopérer avec une forme complémentaire ménagée sur le bol (100) de préparation et/ou de cuisson d'aliments, la troisième déformation étant partie du système de verrouillage à baïonnette.

8. Porte-lame selon l'une quelconque des revendications 1 à 7, comprenant en outre un deuxième joint (12) configuré pour réaliser l'étanchéité entre le porte-lame (1) et le bol () de préparation et/ou de cuisson d'aliments.

9. Porte-lame selon l'une quelconque des revendications 1 à 8, comprenant un collet de verrouillage (50) configuré pour bloquer la translation verticale de l'arbre (41) du support (40).

10. Porte-lame selon la revendication 1, **caractérisé en ce que** l'organe de verrouillage (20) comprend au moins une partie supérieure (21) comprenant une première face (21a) conformée pour recevoir le premier joint (11).

11. Porte-lame selon la revendication 10, **caractérisé en ce que** la partie supérieure (21) de l'organe de verrouillage (20) comprend une rainure de réception (21c) conformée pour loger au moins un deuxième joint (12), ladite rainure de réception (21c) étant ménagée au niveau d'une deuxième face de la portion supérieure (21), opposée à la première (21a).

12. Porte-lame selon la revendication 11, **caractérisé en ce que** l'organe de verrouillage (20) comprend un premier alésage (20a) conformé pour recevoir l'arbre (41) du support (40) ou un palier à billes configuré pour recevoir l'arbre (41) du support (40).

## Patentansprüche

1. Klingenhalter (10) für einen Haushaltsroboter, der mindestens zur Zubereitung von Nahrungsmitteln bestimmt ist, wobei der Klingenhalter (10) konfiguriert ist, um auf abnehmbare Weise in einer Schüssel (100) zur Zubereitung und/oder zum Garen von Nahrungsmitteln eines Haushaltsroboters positioniert zu werden, wobei der Klingenhalter (10) Folgendes umfasst:
- mindestens ein Verriegelungselement (20), konfiguriert zum Verriegeln des Klingenhalters (10) in der Schüssel (100),
- mindestens eine Klinge (30), umfassend mindestens ein erstes Messer (32) und mindestens ein zweites Messer (33),
- einen Träger (40), umfassend mindestens eine Welle (41), der sich entlang einer Längsachse des Klingenhalters (10) erstreckt, wobei die Klinge (30) auf dem Träger (40) um die Welle (41) herum montiert ist,
- einen ersten Dichtungsring (11),
wobei die Klinge (30) einen Mittelabschnitt (31) umfasst, ausgehend von dem sich das erste Messer (32) und das zweite Messer (33) radial erstrecken, wobei der Mittelabschnitt (31) der Klinge (30) eine Durchgangsöffnung (31a) der Welle (41) des Trägers (40) umfasst, wobei der Mittelabschnitt (31) der Klinge (30) eine erste Fläche, die mit dem ersten Dichtungsring (11) zusammenwirkt, der zwischen dem Verriegelungselement (20) und dem Mittelabschnitt (31) der Klinge (30) positioniert ist, und eine zweite Fläche umfasst, die der ersten Fläche gegenüberliegt, und auf der der Träger (40) positioniert ist, wobei der erste Dichtungsring (11) gegen die erste Fläche angeordnet ist und eine Lippendichtung ist, wobei der Träger (40) einen ersten Abschnitt (40a) umfasst, auf dem die Welle (41) montiert ist und der im montierten Zustand des Klingenhalters (10) gegenüber der zweiten Fläche (31c) des Mittelabschnitts angebracht ist.

2. Klingenhalter nach Anspruch 1, wobei der Mittelabschnitt (31) der Klinge (30) auf dem Träger (40) auf endgültige Weise fest verbunden ist.

3. Klingenhalter nach einem der Ansprüche 1 oder 2, wobei der Mittelabschnitt (31) der Klinge in dem Träger (40) aufgeformt ist.

4. Klingenhalter nach einem der Ansprüche 1 bis 3, wobei der Träger weiter ein Griffelement (42) umfasst, das an einem ersten Abschnitt des Trägers (40) angebracht ist.

5. Klingenhalter nach einem der Ansprüche 1 bis 4, wobei das Verriegelungselement (20) einen unteren Abschnitt (22) umfasst, der zum Zusammenwirken mit einem Teil der Schüssel (100) zur Zubereitung und/oder zum Garen von Nahrungsmitteln angepasst ist.

6. Klingenhalter nach Anspruch 5, wobei der untere Abschnitt (22) mindestens eine erste Deformation (22a) und mindestens eine zweite Deformation (22b) umfasst, von denen jede dazu bestimmt ist, mit einer an der Schüssel (100) zur Zubereitung und/oder zum Garen von Nahrungsmitteln angeformten komplementären Form zusammenzuwirken, wobei die erste Deformation (22a) und die zweite Deformation (22b) jeweils Teil eines Bajonettverriegelungssystems sind.

7. Klingenhalter nach Anspruch 6, wobei der untere Abschnitt eine dritte Deformation (22c) umfasst, die dazu bestimmt ist, mit einer an der Schüssel (100) zur Zubereitung und/oder zum Garen von Nahrungsmitteln angeformten komplementären Form zusammenzuwirken, wobei die dritte Deformation Teil des Bajonettverriegelungssystems ist.

8. Klingenhalter nach einem der Ansprüche 1 bis 7, wobei weiter umfassend einen zweiten Dichtungsring (12), konfiguriert zum Bereitstellen der Abdichtung zwischen dem Klingenhalter (1) und der Schüssel (100) zur Zubereitung und/oder zum Garen von Nahrungsmitteln.

9. Klingenhalter nach einem der Ansprüche 1 bis 8, umfassend einen Verriegelungskragen (50), konfiguriert zum Blockieren der vertikalen Verschiebung der Welle (41) des Trägers (40).

10. Klingenhalter nach Anspruch 1, **dadurch gekennzeichnet, dass** das Verriegelungselement (20) mindestens ein oberes Teil (21) umfasst, das eine erste Fläche (21a) umfasst, die zum Aufnehmen des ersten Dichtungsrings (11) angepasst ist.

11. Klingenhalter nach Anspruch 10, **dadurch gekennzeichnet, dass** das obere Teil (21) des Verriegelungselements (20) eine Aufnahmenut (21c) umfasst, die zur Unterbringung mindestens eines zweiten Dichtungsrings (12) angepasst ist, wobei die Aufnahmenut (21c) auf Höhe einer zweiten Fläche des oberen Teils (21), der ersten (21a) gegenüberliegend, angeformt ist.

12. Klingenhalter nach Anspruch 11, **dadurch gekennzeichnet, dass** das Verriegelungselement (20) eine zur Aufnahme der Welle (41) des Trägers (40) angepasste erste Bohrung (20a) oder ein zur Aufnahme der Welle (41) des Trägers (40) konfiguriertes Kugellager umfasst.

## Claims

1. Blade holder (10) for a food processor intended at least for preparing food, the blade holder (10) being configured to be positioned removably in a food processor bowl (100) for preparing and/or cooking food, the blade holder (10) comprising:
- at least one locking member (20) configured to lock the blade holder (10) in the bowl (100),
- at least one blade (30) comprising at least one first knife (32) and at least one second knife (33),
- a support (40) comprising at least one shaft (41) extending on a longitudinal axis of the blade holder (10), the blade (30) being mounted on the support (40) about the shaft (41),
- a first seal (11),
the blade (30) comprises a central portion (31) from which the first knife (32) and the second knife (33) extend radially, the central portion (31) of the blade (30) comprising a through-opening (31a) for the shaft (41) of the support (40), the central portion (31) of the blade (30) comprising a first face (31b), cooperating with the first seal (11) which is positioned between the locking member (20) and the central portion (31) of the blade (30) and a second face, opposite the first face, on which the support (40) is positioned, the first seal (11) being disposed against the first surface and being a lip seal, the support (40) comprising a first portion (40a) on which the shaft (41) is mounted and which is arranged opposite the second face (31c) of the central portion of the blade holder (10) in its assembled state.

2. Blade holder according to claim 1, in which the central portion (31) of the blade (30) is mounted rigidly and permanently on the support (40).

3. Blade holder according to any one of claims 1 or 2, in which the central portion (31) of the blade (30) is overmoulded in the support (40).

4. Blade holder according to any one of claims 1 to 3, in which the support (40) additionally comprises a gripping member (42) arranged on a first portion of the support (40).

5. Blade holder according to any one of claims 1 to 4, in which the locking member (20) comprises a lower portion (22) shaped so as to cooperate with a part of the bowl (100) for preparing and/or cooking food.

6. Blade holder according to claim 5, in which the lower portion (22) comprises at least one first deformation (22a) and at least one second deformation (22b), each configured to cooperate with a complementary shape provided on the bowl (100) for preparing and/or cooking food, the first deformation (22a) and the second deformation (22b) each being part of a bayonet locking system.

7. Blade holder according to claim 6, in which the lower portion comprises a third deformation (22c) configured to cooperate with a complementary shape provided on the bowl (100) for preparing and/or cooking food, the third deformation being part of a bayonet locking system.

8. Blade holder according to any one of claims 1 to 7, additionally comprising a second seal (12) configured to provide the leaktightness between the blade holder (1) and the bowl (100) for preparing and/or cooking food.

9. Blade holder according to any one of claims 1 to 8, comprising a locking flange (50) configured to block the vertical translation of the shaft (41) of the support (40).

10. Blade holder according to claim 1, **characterized in that** the locking member (20) comprises at least one upper portion (21) having a first face (21a) shaped to receive the first seal (11).

11. Blade holder according to claim 10, **characterized in that** the upper portion (21) of the locking member (20) comprises a receiving groove (21c) shaped to house at least one second seal (12), said receiving groove (21c) being formed on a second face of the upper portion (21), opposite the first (21a).

12. Blade holder according to claim 11, **characterized in that** the locking member (20) comprises a first bore (20a) shaped to receive the shaft (41) of the support (40) or a ball bearing configured to receive the shaft (41) of the support (40).
